# EUROPEAN PATENT APPLICATION

(11) **EP 4 537 963 A1**
(43) Date of publication of application: **16.04.2025**
(21) Application number: 23203546.9
(22) Date of filing: 13.10.2023
(51) Int. Cl.: B23B 27/16

(54) **CUTTING INSERT AND METHOD FOR MANUFACTURING A CUTTING INSERT**

(71) Applicant: AB Sandvik Coromant, 811 81 Sandviken (SE)
(72) Inventor: WICKSTRÖM, David, 811 81 Sandviken (SE); LÖF, Ronnie, 811 81 Sandviken (SE); WIKBLAD, Krister, 811 81 Sandviken (SE); JOHANSSON, Adam, 811 81 Sandviken (SE)
(74) Representative: Sandvik

(57) **Abstract**

The invention relates to a cutting insert (1) mountable in a seat (2) of a tool body (10) of a turning tool. The cutting insert (1) comprises a first side (5) including a rake face (15), a second side (6) opposite the first side (5), a peripheral surface (7) extending between the first side (5) and the second side (6) wherein the peripheral surface (7) includes a relief surface (17), and a cutting edge (91) arranged at the intersection between the relief surface (17) and the rake face (15). The peripheral surface further comprises three support portions (8a, 8b, 8c) arranged to contact a seat wall of the seat of the tool body when the cutting insert is mounted in the seat, wherein at least one of the support portions (8a, 8b, 8c) has a surface that has been grinded to adjust the position of the cutting edge (91) with respect to the tool body (10) when the cutting insert (1) is mounted in the seat (2). The invention also relates to a method for manufacturing such cutting insert.

## Description

### TECHNICAL FIELD

The invention relates to metal cutting, and in particular turning.

### BACKGROUND ART

Turning is a common metal cutting operation wherein a turning tool is used to cut a rotating workpiece. Such turning tool often includes a cutting insert, for example made from cemented carbide. The cutting insert is mounted in a seat arranged in the turning tool, for example using a screw or some other fastening mechanism. When mounted in the seat, the cutting insert is often supported not only by the bottom surface of the seat, but also by portions of wall surfaces of the seat. For a stable and robust positioning within the seat, the cutting insert is often supported at three distinct contact portions or points along the wall surface of the seat.

The service life of a turning tool is long, whereas the cutting inserts are regularly replaced (when they are worn). When using a new cutting insert in a turning tool, the machining results may differ compared to previous machining operations with the same turning tool. If the results are found to deviate too much from what is expected, it may be necessary to compensate for such deviations in subsequent machining operations, for example by using compensative adjustment via the machine control system. It would be an advantage if the amount of compensative adjustment that is often required after changing cutting inserts could be reduced.

Accordingly, there is a need for turning tools and cutting inserts that provide consistent and predictable machining results, requiring less adjustments after changing the cutting insert.

### SUMMARY

It is an object of the present invention to mitigate the shortcomings of the prior art and to provide cutting inserts and methods that provide consistent and predictable machining results without, or at least with reduced, need for adjustments in the machine tool.

Thus, according to a first aspect, the invention relates to a cutting insert that is mountable in a seat of a tool body of a turning tool, wherein the cutting insert comprises:
- a first side including a rake face,
- a second side opposite the first side,
- a peripheral surface extending between the first side and the second side wherein the peripheral surface includes a relief surface, and
- a cutting edge arranged at the intersection between the relief surface and the rake face.
The peripheral surface further comprises three support portions arranged to contact a seat wall of the seat of the tool body when the cutting insert is mounted in the seat, wherein at least one of the support portions has a surface that has been grinded to adjust the position of the cutting edge with respect to the tool body when the cutting insert is mounted in the seat.

Cemented carbide cutting inserts are usually made from carbide powder that is pressed into the desired shape, and then sintered. During the sintering process the cutting inserts will shrink, and due to small random variations, the geometry of one cutting insert may sometimes be slightly different from the geometry of another cutting insert. As long as the cutting edge is correctly positioned, a slightly different geometry may not necessarily constitute a big problem. However, the inventors have found that the position of a cutting edge of a first cutting insert, when mounted in the seat of a turning tool, may differ significantly from a position of the cutting edge of a second cutting insert when mounted in the same turning tool. The inventors have found that by including grindable support portions on the peripheral surface of the sintered cutting insert, it will be possible to adjust the position of the cutting edge with respect to the tool body in which it is mounted, by grinding one or more of the support portions. Thereby, random variations between cutting inserts can be compensated for. By grinding the support portions of different cutting inserts differently based on measured positions of the respective cutting edges, the cutting edges of different cutting inserts may be consistently located at the same position with respect to the tool body of the turning tool.

The peripheral surface includes at least three support portions. The peripheral surface may also include more than three support portions, such as four support portions. According to some embodiments, the support portions are protrusions protruding from adjacent (non-protruding) parts of the peripheral surface. By using support portions in the form of protrusions, the achievable amount of change of the position of the cutting edge can be significant, even with a rather simple grinding operation wherein only a small amount of material is removed, and without requiring any special geometry of the seat in the turning tool.

Before grinding, each support portion may protrude by a distance that makes it possible to easily grind the support portion to an extent that provides sufficient re-location of the cutting edge. For example, the support portions may protrude at least 10 micrometers, for example at least 30 micrometers, such as 50 micrometers or more. A minimum protrusion of 50 micrometers could be suitable for many applications and may provide a sufficient grinding allowance such that the protruding support portions do not have to be completely removed in the grinding process. In other words, before grinding, the support potions may protrude a distance that is sufficiently great to make sure that the support portions also after grinding still protrude to some extent from the adjacent portions of the peripheral surface.

The peripheral surface of the cutting insert may comprise a plurality of interconnected part surfaces of which at least a first part surface and a second part surface are connected via a corner surface. According to some embodiments, a first one of the support portions is located on the first part surface adjacent such corner surface.

"Adjacent" in this context should be understood as that the support portion is either directly adjoining the corner surface or located in the immediate vicinity of the corner surface.

Such configuration will ensure that the first support portion will contact the wall of an insert seat of a turning tool at an outer position of the wall of the insert seat, i.e., at a distal position of the seat wall, as far away as possible from a proximal end of the seat. This will ensure optimal support of the cutting insert when using the turning tool.

According to some embodiments, the area of each of the support portions is at least 1% of the total area of the peripheral surface. The area of the support portions should not be too small, making sure that a sufficient contact area between the support portions and the wall of the insert seat is obtained. Also, it may be beneficial if the area of each support portion is not too large, such that the regions that have to be grinded for re-positioning the cutting edge can be kept at a minimum.

For example, each of the support portions may have a surface area corresponding to 1-5 % of the total area of the peripheral surface. As an example, the surface area of each support portion may be at least 1 mm², e.g., about 2 mm² or more.

Each of the support portions may be located adjacent a first edge formed by the intersection between the first side and the peripheral surface.

"Adjacent" in this context should be understood as either directly adjoining the first side, such that the edge of the support portion constitutes a part of said first edge, or being slightly spaced from the first edge but in the immediate vicinity thereof. Thereby, the support portions will contact the walls of the insert seat in a region that is closer to the first side than the second side, when the cutting insert is mounted in the seat. This will make sure that the cutting insert is well supported in the seat.

The first edge should be understood as the complete extension of the intersection between the first side and the peripheral surface, i.e., the extension all around the first side. Accordingly, the first edge comprises the cutting edge. According to some embodiments, each of the support portions extends along at least 2% of the total length of said first edge. For example, each of the support portions may extend along 2-10 % of the total length of said first edge.

According to some embodiments, each of the support portions has a first length of extension in a direction parallel with the first side and a second length of extension in a direction perpendicular to the first side, and wherein the first length of extension is in the range of 0.5 - 2 times the second length of extension. Hence, according to such embodiments, the support portions are not elongated structures or ribs but have a rather symmetrical design, for example corresponding to square, or substantially square, regions. Such support portions will be easy to grind with consistent and predictable results with respect to the amount and kind of repositioning of the cutting edge that the grinding will cause.

The cutting insert may have more than one cutting edge, i.e., the cutting insert may be indexable. In such case, the peripheral surface may comprise at least three support portions for each cutting edge. As an example, for an indexable cutting insert having two cutting edges, the peripheral surface may include a total of six support portions, or a total of eight support portions if there are four support portions for each cutting edge.

According to another aspect, the invention relates to a method for manufacturing a cutting insert according to any of the embodiments disclosed herein mountable in a seat of a tool body of a turning tool, wherein the method comprises the steps of:
- obtaining an untreated cutting insert that comprises:
   ∘ a first side including a rake face,
   ∘ a second side opposite the first side,
   ∘ a peripheral surface extending between the first side and the second side wherein the peripheral surface comprises a relief surface and at least three grindable support portions, and
   ∘ a cutting edge arranged at the intersection between the relief surface and the rake face;
- fixing the untreated cutting insert in a fixture;
- measuring a position of the cutting edge of the untreated cutting insert; and
- grinding, based on the measured position of the cutting edge and a nominal model of the tool body and cutting insert, one or more of the grindable support portions to adjust the position of the cutting edge with respect to the tool body when the cutting insert is mounted in the seat thereof.

Untreated, us used in this context, should be understood as a cutting insert that has not yet been grinded according to the present disclosure. For example, the untreated cutting insert may have been pressed from carbide powder, and then sintered, wherein the grindable support portions have been formed already in the pressing process (i.e., as defined by the shape of the cutting insert mold). The untreated cutting insert may also have been coated with a wear resistant material. Alternatively, such coating may be performed after grinding the support portions, or the cutting insert may be uncoated.

A nominal model of the tool body and cutting insert refers to a geometric definition of an ideal tool body and cutting insert, i.e., with no geometric deviations from the intended geometry. Such nominal model may for example be a digital model, such as a CAD model.

Due to the grinding of one or more of the support portions, any random deviations in the geometry of the cutting insert can be compensated for, and the respective cutting edges of a plurality of cutting inserts modified using this method will consistently be located at a position that closely corresponds to the nominal (i.e. desired or expected) cutting edge position with respect to a tool body in which the cutting inserts are mounted. Obviously, deviations of the cutting edge position may also be caused by imperfections in the tool body and the seat thereof, but such deviations will then at least be consistent for all cutting inserts mounted in the tool body.

The position of the cutting edge may be defined by at least one point along the cutting edge, and preferably more than one point, such as two points. It is also envisaged that the position of the complete cutting edge is considered, such that the position of every point along the cutting edge is detected and used in the analysis.

The aim of the method is to grind the support portions such that the position of the cutting edge completely corresponds to the nominal cutting edge position. However, in some cases this may not be possible. Nevertheless, after grinding of the support portions, the position of the cutting edge when the cutting insert is mounted in the seat of a tool body should at least be closer to the nominal position than it would have been absent the grinding of the support portions. Accordingly, at least a majority of all points defining the position of the cutting edge should, after grinding the support portions, have approached the nominal cutting edge position.

### BRIEF DESCRIPTION OF DRAWINGS

The solution will now be described in more detail by means of exemplary embodiments and with reference to the accompanying drawings, in which:
Fig. 1 is a perspective view of a cutting insert according to an embodiment of the invention.
Fig. 2 is a top view of the cutting insert, as seen from a direction towards, and perpendicular to, the first side of the cutting insert.
Figs. 3 is a side view of the cutting insert as seen from a direction III indicated in fig. 2 towards the peripheral surface of the cutting insert.
Fig. 4 is a perspective view of a tool body of a turning tool that includes a seat for accommodating the cutting insert.
Fig. 5 is a perspective view of the turning tool with the cutting insert mounted in the seat.
Fig. 6 is a close-up view of the cutting insert mounted in the seat.
Fig. 7a is a perspective view of a cutting insert according to a second embodiment.
Fig 7b is a top view of the cutting insert according to the second embodiment mounted in the seat of a turning tool.
Fig. 8 illustrates the position of the cutting edge of a cutting insert according to the invention when fixed in a fixture, in relation to a reference position.
Fig. 9 is an enlarged view of the region IX indicated in fig. 8.
Fig. 10 is an enlarged view of the region X indicated in fig. 8.
Fig. 11 illustrates the location of the cutting edge when mounted in the seat of the tool body after grinding the grindable support portions.
Fig. 12 is a flowchart illustrating a method for manufacturing a cutting insert according to the invention.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

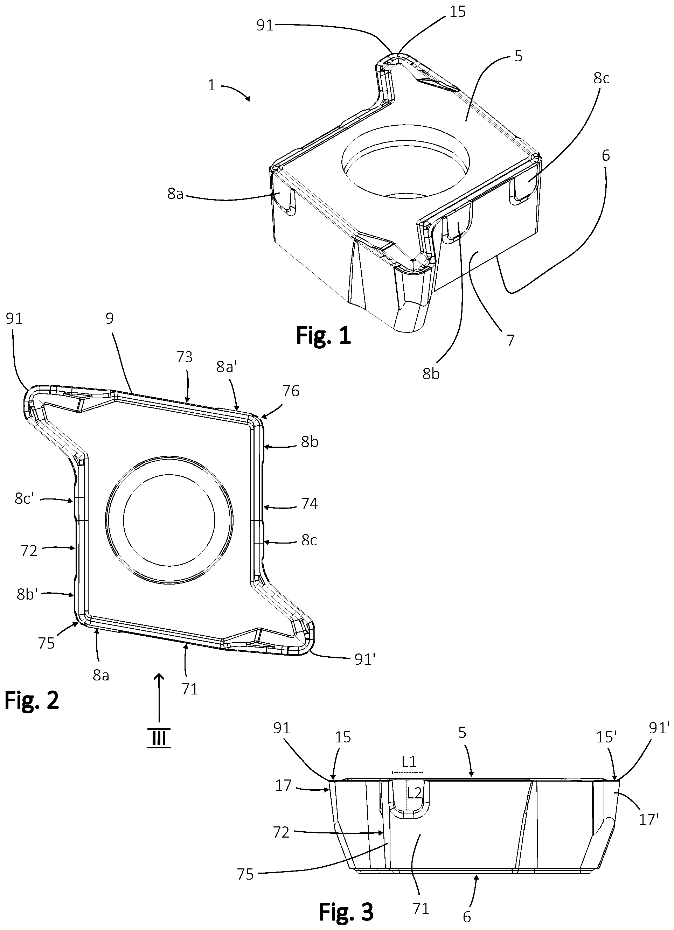

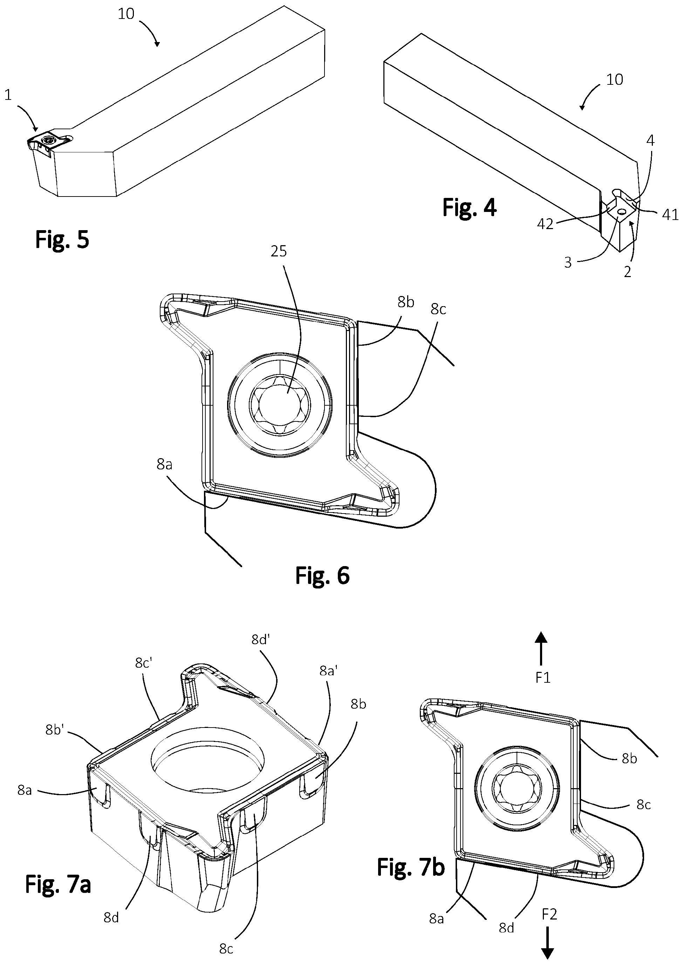

Figs. 1-3 illustrate a cutting insert 1 according to an embodiment of the invention, and figs. 4-6 illustrate a turning tool comprising a tool body 10 having a seat 2 in which the cutting insert 1 is mounted.

For simplicity, the description and figures consistently refer simply to a "cutting insert" 1, irrespective of whether it is the untreated cutting insert, i.e., the cutting insert before the support portions have been grinded, or the finished cutting insert where one or more of the support portions has been grinded. Whether a cutting insert referred to in the detailed description is untreated or not will either be apparent from the text or not important in view of the features described.

The cutting insert 1 has a first side 5, a second side 6 and a peripheral surface 7 extending therebetween. A first edge 9 is formed by the intersection between the first side 5 and the peripheral surface 7. The first side 5 includes a rake face 15 and the peripheral surface 7 includes a clearance surface 17. A cutting edge 91, being a part of the first edge 9, is formed at the intersection between the rake face 15 and the clearance surface 17. In the illustrated embodiment, the cutting insert 1 is indexable and has a second cutting edge 91', formed at the intersection between a second rake face 15' and a second clearance surface 17'. In other embodiments, the number of cutting edges may be smaller or greater. As an example, the cutting insert could be double sided and have one or more cutting edges also on the second side 6 of the cutting insert.

The cutting insert 1 includes a first, a second and a third support portion 8a, 8b, 8c arranged at the peripheral surface 7. When the cutting insert 1 is mounted in a seat 2 of a tool body 10 of a turning tool (illustrated in fig. 4), with the second side 6 resting upon a bottom surface 3 of the seat 2, and the cutting edge 91 arranged in an operative position (as illustrated in figs. 5-6), the support portions 8a, 8b, 8c are arranged to contact a seat wall 4 of the seat 2. In the illustrated embodiment, the seat wall 4 includes a first wall portion 41 and a second wall portion 42. There are three support portions for each cutting edge on the cutting insert. Hence, when the cutting insert 1 is arranged in the seat 2 with the second cutting edge 91' arranged in an operative position (not illustrated), a fourth, a fifth and a sixth support portion 8a', 8b', 8c' are arranged to contact the seat wall 4 of the seat 2.

The support portions 8a, 8b, 8c are arranged such that grinding thereof results in a change in the position of the cutting edge 91 with respect to the tool body 10 when the cutting insert 1 is mounted in the seat 2.

The support portions are protrusions, protruding from adjacent parts of the peripheral surface 7. Before grinding, the support portions protrude approximately 50 micrometers from the adjacent parts of the peripheral surface. As seen in the figures, a transition between the support portions and the adjacent parts of the peripheral surface is smooth without sharp corners, to improve the strength.

The peripheral surface 7 includes four interconnected part surfaces 71, 72, 73, 74. The first part surface 71 is connected to the second part surface 72 via a first corner surface 75. The third part surface 73 is connected to the fourth part surface 74 via a second corner surface 76.

When the first cutting edge 91 is in an operative position, as illustrated in the figures, the first and the second support portions 8a, 8b are arranged to provide support at outer (distal) parts of the respective first and second wall portions 41, 42 of the seat wall 4. Hence, the first support portion 8a is located on the first part surface 71 adjacent the first corner surface 75, and the second support portion 8b is located on the fourth part surface 74 adjacent the second corner surface 76.

In a corresponding way, when the second cutting edge 91' is in an operative position (not shown), the fourth and the fifth support portions 8a', 8b' are arranged to provide support at outer parts of the respective first and second wall portions 41, 42 of the seat wall 4. Hence, the fourth support portion 8a' is located on the third part surface 73 adjacent the second corner surface 76, and the fourth support portion 8b' is located on the second part surface 72 adjacent the first corner surface 75.

The length of extension of each support portion - both the length of extension L1 in a direction parallel to the first side 5 and a length of extension L2 in a direction perpendicular to the first side 5 - should be large enough to provide a sufficient area of contact between the support portion and the seat wall 4. In the illustrated embodiment, the length of extension L1 in a direction parallel to the first side 5 is approximately the same as the length of extension L2 in a direction perpendicular to the first side 5, in this case approximately 1.5 mm.

Each support portion is located adjacent the first edge 9, such as to make contact with the seat wall 4 in an upper region thereof. Hence, each support portion has an extension on the peripheral surface 7 along a part of the first edge 9. In the illustrated embodiment, each of the support portions extends along approximately 3% of the total length of the first edge 9.

It may be preferred that the surface area of each support portion is at least 1% of the total surface area of the peripheral surface 7. In the illustrated example, the surface area of each support portion is about 2 mm², corresponding to approximately 1-2% of the total area of the peripheral surface 7.

For double-sided cutting inserts having cutting edges arranged also at the intersection between the second side 6 and the peripheral surface 7, additional support portions would be arranged at the peripheral surface 7 adjacent the second side 6.

Figs. 7a and 7b illustrate a cutting insert according to a second embodiment. The only difference from the previously described embodiment is that the peripheral surface includes one additional support portion 8d, 8d' for each cutting edge 91, 91'. Accordingly, there are four support portions for each cutting edge. As an example, in view of the first cutting edge 91, all four support portions 8a, 8b, 8c, 8d may be in contact with the seat wall when the cutting insert is mounted in the seat, at least if the support portions are grinded to perfectly match the seat wall 4 and the seat wall 4 does not have any geometric defects. However, when machining in a first feed direction F1 it is also possible that only the first, second and third support portions 8a, 8b, 8c will engage the seat wall (as a result of the cutting forces that arise). On the other hand, when machining in an opposite feed direction F2, it is possible that only the first, second and fourth support portions 8a, 8b, 8d will engage the seat wall. Thus, with a fourth support portion 8d it will be possible to change feed direction without risking that the cutting insert rotates within the seat.

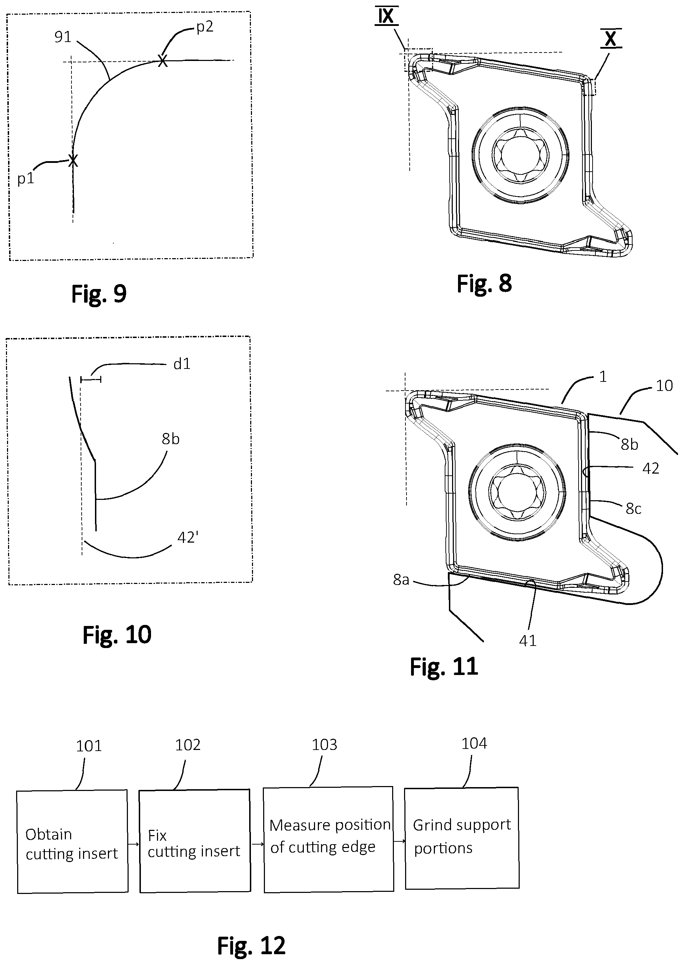

A method for manufacturing a cutting insert according to the invention will now be described with reference to figs. 8-12.

In a first step 101, an untreated cutting insert is obtained, wherein the untreated cutting insert comprises:
- a first side 5 including a rake face 15,
- a second side 6 opposite the first side 5,
- a peripheral surface 7 extending between the first side 5 and the second side 6 wherein the peripheral surface 7 includes a relief surface 17 and at least three grindable support portions 8a, 8b, 8c, and
- a cutting edge 91 arranged at the intersection between the relief surface 17 and the rake face 15;

When producing the untreated cutting insert, it is formed with support portions that are grindable (but not yet grinded). The support portions are preferably protrusions, as described previously.

In a second step 102, the untreated cutting insert is fixed in a fixture (not shown). The fixture is preferably arranged in connection to, and at a known location with respect to, a grinding machine. The fixture may be embodied in various ways, for example depending on what kind of measurements that are made in the subsequent step, but must fixate the cutting insert at a known location in a predictable and repeatable manner.

Preferably, the fixture should not cover the support portions on the peripheral surface of the untreated cutting insert, such that subsequent grinding of the support portions is possible without removing the cutting insert from the fixture. As a simple example, the cutting insert may be attached to the fixture via the central hole in the cutting insert that is used to mount the cutting insert in a seat of a turning tool.

In a third step 103, the position of the cutting edge is measured.

The position of the cutting edge can be measured by various means. As an example, a contactless sensor may be used for measuring, such as a sensor based on optical means, e.g. a laser sensor. Alternatively, positions may be measured by a device physically contacting the cutting insert, for example using a measuring device, e.g. a probe, touching one or more points on the cutting edge (or preferably points on the peripheral surface adjacent the cutting edge, such as to not damage the cutting edge).

In a fourth step 104, one or more of the grindable support portions are ground on the basis of the measured position of the cutting edge and a nominal model of the tool body and cutting insert, to adjust the position of the cutting edge with respect to the tool body when the cutting insert is mounted in the seat thereof. In other words, when the cutting insert is subsequently mounted in the seat of the tool body with the second side of the cutting insert resting upon the seat bottom and the support portions contacting the seat wall, the position of the cutting edge will correspond to, or at least be closer to, a nominal cutting edge position.

The nominal model of the tool body and the cutting insert may be a digital model, such as CAD model. When the nominal model is related to the measured position of the cutting edge, it is possible to determine how much material that must be removed from the support portions for the cutting edge to be correctly located when the cutting insert is mounted in the seat of the tool body. More specifically, the position of the seat wall surfaces of the nominal model in relation to the measured position of the cutting edge corresponds to where the contact surfaces of the support portions of the cutting insert should be located in order to position the cutting insert within the seat of the tool body such that the cutting edge is at a nominal (i.e., desired or expected) position.

The measured position of the cutting edge of the untreated cutting insert is illustrated in figs. 8-9. For clarity, the fixture in which the cutting insert is fixed is not illustrated in the figures. Two orthogonally extending lines (dashed in the figure) schematically illustrate the position of the cutting edge, for example as measured by a laser sensor. The measurement can also be made using a physical measurement device, for example formed by two walls extending at right angles according to the dashed lines in the figure and that contacts the peripheral surface of the cutting insert just below the cutting edge. In practice, such measurement may correspond to measuring two distinct points p1, p2, illustrated in fig. 9.

This measured position of the cutting edge, when related to the nominal model of the tool body and the cutting insert, provides information on how the support portions must be grinded to provide a correct positioning of the cutting edge. That is, in order for the cutting edge to be positioned at a location according to the nominal model, the support portions must be grinded to match the locations of the wall portions of the seat according to the nominal model.

As an example, when the nominal model is related to the position of the cutting edge as measured in the previous step, the location of a nominal second wall portion 42' of the seat wall (illustrated by a dashed line in fig. 10) in relation to the second support portion 8b, directly gives a measure of the amount of grinding that should be applied to the second support portion 8b. Hence, by removing material from the support portion 8b to a depth that corresponds to a distance d1 between the outer surface of the not yet grinded support portion 8b and the nominal second seat wall portion 42', the cutting edge will be correctly located when the cutting insert is subsequently mounted in the seat of the tool body.

The steps of measuring the position of the cutting edge and grinding the support portions may be repeated if required to bring the cutting edge position sufficiently close to the nominal cutting edge position.

Fig. 11 illustrates the location of the cutting edge when the cutting insert with grinded support portions has been mounted in the seat of the turning tool. A desired position, i.e., the nominal cutting edge position with respect to the tool body, is schematically illustrated by dashed lines. As seen in figure 11, the position of the cutting edge after grinding of the support portions has in this case not only approached the nominal cutting edge position, but completely corresponds to it.

In the illustrated example, the cutting insert has been re-positioned compared to the position it would have had absent the grinding, by a translative movement that, in a direction perpendicular to the seat wall portion 42, corresponds to the distance d1 illustrated in fig. 10.

It is also envisaged, though, that a more complex re-positioning of the cutting insert, including rotation of the cutting insert within the seat, can be achieved by grinding the support portions. In this regard, it should be noted that a translation of the cutting insert within the seat, toward any of the wall portions in the seat wall, will depend on the amount of material removed from the support portions facing the wall portion, whereas a rotation of the cutting insert within the seat may be achieved by grinding each support portion at an angle corresponding to the desired rotation, or simply by grinding the support portions that face the same wall portion differently. As an example, if removing more (or less) material from the second support portion 8b than from the third support portion 8c, a slight rotation of the cutting insert within the seat may be achieved. To be able to correctly re-position the cutting insert by rotation within the seat and not only by translation, a more precise measurement of the position of the cutting edge may be required, i.e., a measurement based on more than the two points p1, p2 illustrated in fig. 9.

In some cases, it may be enough to grind only one or two of the grindable support portions in order to re-position the cutting edge to the desired position. However, to make sure that grinding of the support portions to account for random variations of the geometry is always possible, it may be beneficial if the support portions have a sufficient thickness. Therefore, when producing the untreated cutting insert, the support portions may deliberately be made thicker than normally required. As a result, all the support portions would usually have to be grinded, at least to some extent, to obtain a satisfactory re-positioning of the cutting insert.

In the illustrated embodiment, a fastening screw 25 is used to fix the insert within the seat 2. It should be noted that this fastening screw 25 does not limit the possible translation of the cutting insert within the seat. This is because the screw hole in the seat bottom 3 is not coaxially arranged with respect to the hole in the cutting insert, but displaced slightly towards the wall portions of the seat wall. Thereby, when the cutting insert 1 is fixed in the seat by the fastening screw 25, the fastening screw 25 is slightly bent and the cutting insert pressed against the seat wall. A translative movement of the cutting insert within the insert seat towards the seat wall is therefore possible, but will affect the deflection of the screw (and thereby the force by which the support portions are pressed against the seat wall). In other words, the position of the cutting insert within the seat is dependent only on the location and extension of the parts of the peripheral surface of the cutting insert (in this case the support portions) that are arranged to contact the seat wall.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited.

## Claims

1. A cutting insert (1) mountable in a seat (2) of a tool body (10) of a turning tool,
wherein the cutting insert (1) comprises
- a first side (5) including a rake face (15);
- a second side (6) opposite the first side (5);
- a peripheral surface (7) extending between the first side (5) and the second side (6) wherein the peripheral surface (7) includes a relief surface (17); and
- a cutting edge (91) arranged at the intersection between the relief surface (17) and the rake face (15);
**characterized in that** the peripheral surface comprises three support portions (8a, 8b, 8c) arranged to contact a seat wall of the seat of the tool body when the cutting insert is mounted in the seat, wherein at least one of the support portions (8a, 8b, 8c) has a surface that has been grinded to adjust the position of the cutting edge (91) with respect to the tool body (10) when the cutting insert (1) is mounted in the seat (2).

2. A cutting insert according to claim 1, wherein the support portions are protrusions protruding from adjacent parts of the peripheral surface.

3. A cutting insert according to any of the previous claims, wherein the peripheral surface (7) comprises a plurality of interconnected part surfaces (71, 72, 73, 74) of which at least a first part surface (71) and a second part surface (72) are connected via a corner surface (75), wherein a first one of the support portions (8a) is located on the first part surface (71) adjacent the corner surface (75).

4. A cutting insert according to any of the previous claims, wherein each of the support portions has an area that is at least 1% of the total area of the peripheral surface.

5. A cutting insert according to any of the previous claims, wherein each of the support portions is located adjacent a first edge (9) formed by the intersection between the first side and the peripheral surface,

6. A cutting insert according to claim 5, wherein each of the support portions extends along at least 2% of the total length of the first edge (9).

7. A cutting insert according to any of the previous claims wherein each of the support portions has a first length of extension (L1) in a direction parallel with the first side (5) and a second length of extension (L2) in a direction perpendicular to the first side (5), and wherein the first length of extension (L1) is in the range of 0.5 - 2 times the second length of extension (L2)

8. A cutting insert according to any of the previous claims, wherein the cutting insert has more than one cutting edge (91, 91'), and wherein the peripheral surface comprises at least three support portions (8a, 8b, 8c, 8a', 8b', 8c') for each cutting edge (91, 91').

9. A method for manufacturing a cutting insert (1) according to any of the claims 1-8 mountable in a seat of a tool body of a turning tool, wherein the method comprises the steps of:
- obtaining an untreated cutting insert that comprises:
- a first side (5) including a rake face (15),
- a second side (6) opposite the first side (5),
- a peripheral surface (7) extending between the first side (5) and the second side (6) wherein the peripheral surface (7) includes a relief surface (17) and at least three grindable support portions, and
- a cutting edge (91) arranged at the intersection between the relief surface (17) and the rake face (15);
- fixing (901) the untreated cutting insert in a fixture;
- measuring (902) a position of the cutting edge of the untreated cutting insert; and
- grinding (903), based on the measured position of the cutting edge and a nominal model of the tool body and cutting insert, one or more of the grindable support portions to adjust the position of the cutting edge (91) with respect to the tool body (10) when the cutting insert (1) is mounted in the seat (2) thereof.

10. A method according to claim 9, wherein the step of grinding one or more of the grindable support portions comprises grinding all the at least three grindable support portions.

11. A method according to any of the claims 9-10, wherein the position of the cutting edge is defined by the position of at least two points along the cutting edge.
